(19) Europäisches Patentamt
European Patent Office
Office européen des brevets

(11) EP 2 987 774 A2

(12) EUROPÄISCHE PATENTANMELDUNG

(43) Veröffentlichungstag:
24.02.2016 Patentblatt 2016/08

(51) Int Cl.:
C03B 23/035 (2006.01)    C03B 23/025 (2006.01)
C03B 23/023 (2006.01)    C03B 23/03 (2006.01)
C03B 32/02 (2006.01)

(21) Anmeldenummer: 15177953.5

(22) Anmeldetag: 22.07.2015

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
MA

(30) Priorität: 31.07.2014 DE 102014110923

(71) Anmelder: Schott AG
55122 Mainz (DE)

(72) Erfinder:
• Spier, Martin
  55124 Mainz (DE)
• Mühlke, Oliver
  65366 Geisenheim (DE)

(74) Vertreter: Blumbach Zinngrebe
Patentanwälte
Alexandrastrasse 5
65187 Wiesbaden (DE)

(54) VERFAHREN ZUR HERSTELLUNG EINES GEFORMTEN GLAS- ODER GLASKERAMIKARTIKELS, VERFAHRENSGEMÄSS HERSTELLBARER GLAS- ODER GLASKERAMIKARTIKEL UND DESSEN VERWENDUNG

(57) Die Erfindung stellt ein Verfahren zur formfreien Herstellung eines geformten Grünglas- bzw. Glaskeramikartikels mit vorbestimmter Geometrie bereit, welches die Herstellung feiner lokaler Strukturen mit hoher Oberflächengüte und homogenen Eigenschaften, insbesondere hinsichtlich homogener Keimbildung bzw. Kristallisation ermöglicht. Die Umformung erfolgt thermisch, zum Beispiel durch Lasereinwirkung.

| Vorgabe der Geometrie des Grünglas- bzw. Glaskeramikartikels |
| Berechnung des geeigneten Temperatur/Viskositäts-Zeit-Kraft-Verlaufs |
| Programmierung Laserscanner mit Temperatur-Zeit-Kraft-Verlauf |
| Einbringen des Ausgangsglases |
| Abfahren des Temperatur-Zeit-Kraft-Programms |
| Formung des Grünglases |
| Entnahme des geformten Grünglases |
| Optional: Keramisierung des Grünglases unter Bildung einer Glaskeramik |

Fig.1

EP 2 987 774 A2

## Beschreibung

Die Erfindung betrifft ein Verfahren zur formfreien Herstellung eines geformten Grünglas- bzw. Glaskeramikartikels mit vorbestimmter Geometrie, die Verwendung des verfahrensgemäß hergestellten Grünglas- oder Glaskeramikartikels sowie den geformten Grünglas- oder Glaskeramikartikel.

Die Verformung von Glaskeramik bzw. die Strukturierung der Oberfläche eines Grünglases oder einer Glaskeramik ist seit langem Stand der Technik. So ist beispielsweise seit langem bekannt, die Unterseite der Glaskeramik bzw. des entsprechenden Grünglases direkt bei der Formgebung aus dem schmelzflüssigen Zustand durch die Verwendung von strukturierten Walzen mit Noppen zu versehen. Diese einseitig genoppten Glaskeramikscheiben, die vielfach als Kochfläche Verwendung finden, ermöglichen allerdings nur eine eingeschränkte Sicht auf möglicherweise unter der Kochfläche befindliche elektrooptische Anzeigeelemente wie Displays. Durchgehende Stege (stripes)oder Rillen, sowie die Ausformung eines Trays sind walztechnisch herstellbar und Stand der Technik. Nachteil ist allerdings, dass eine formgebende Walze für jede unterschiedliche Geometrie notwendig ist, wodurch eine kostengünstige Kleinserienfertigung an dem teuersten Aggregat Wanne ausgeschlossen ist. Durchgehende Rillen oder Stege sind walztechnisch sehr einfach herstellbar, da diese Geometrien einfach in die Walze radial eingebracht werden können. Es gibt jedoch Einschränkungen bei den Dickenänderungen. So sind z. B. Dickenänderungen über das Walzband größer 30% problematisch und führen zu unerwünschten Deformationen. Unterbrochene Geometrien wie geschlossene Trays (abgesenkter Bereich) sind walztechnisch schwieriger und führen häufig zu unerwünschten Nebeneffekten/Deformationen vor und hinter der Dickenänderung.

Gegenüber der oben beschriebenen Heißformgebung stehen Verfahren, bei denen eine bereits geformte Glas-bzw. Grünglasscheibe in einem weiteren Schritt umgeformt wird. Beispielsweise beschreibt die DE 2503 467 C2 ein Verfahren zum scharfwinkligen Biegen einer Glasscheibe. An der gewünschten Knickstelle wird Leitpaste aufgebracht und der Bereich durch elektrische Leitung und resultierende Wärmebildung lokal erhitzt und umgeformt. Durch die lokal hohen Temperaturen erfolgt im Bereich der Kante allerdings eine störende Verfärbung, die durch weitere Maßnahmen, beispielsweise nachträgliche Pigmentierung, kaschiert werden muss. Auch handelt es sich beim verwendeten Glas nicht um ein Grünglas.

Die Schrift US 2010/0000259 A1 beschreibt im wesentlichen das Biegen von Gläsern bevorzugt unter der Verwendung von mittelwelliger IR-Strahlung, die besonders gut im Glas absorbiert wird. Auch hierbei wird nicht die Umformung eines Grünglases, also eines Glaskeramikrohlings, beschrieben.

Die Schrift DE 10 2010 020 439 A1 beschreibt mehrere Verfahren zur Verformung einzelner Glasartikel unter anderem unter dem Einsatz einer Form und durch Wahl unterschiedlicher Temperaturen an unterschiedlichen Stellen des Glasformkörpers.

Die Schrift US 2012/0114901 A1 beschreibt ein Verfahren zur Herstellung von Abdeck-Gläsern, wobei hier einzelne Scheiben durch die geeignete Wahl der Temperaturverteilung und geeignete Wahl der Radien der Form gebogen werden. Der Formungsprozess wird beendet, sobald das Produkt über die gesamte Fläche Formkontakt hat.

In der WO 2011/000012 A1 wird ein laserbeheiztes Biegepressen von Werkstoffen beschrieben.

In der DE 10 2011 050628 A1 wird ein formenfreies Biegeverfahren beschrieben, wobei allerdings die Strahlungsquellen als Strahlungsbrenner ausgeführt sind und je nach zu erreichender Biegegeometrie neu mechanisch positioniert werden müssen.

Die DE 101 02576 A1 beschreibt ein Verfahren zur Verformung einer Grünglasscheibe, bei dem die Umformung allein durch Schwerkraft während einer Ofenbehandlung, beispielsweise der Keramisierung des Grünglases, erfolgt.

Die DE 100 47576 A1 beschreibt die Umformung eines Grünglases vor oder während der Keramisierung zur Glaskeramik, wobei die Verformung selbst ebenfalls durch die Einwirkung der Schwerkraft auf das während der Keramisierung verformbare Glas erfolgt und IR-Brenner zur Unterstützung der Erwärmung verwendet werden. Als unterstützende bzw. verstärkende Maßnahmen zur Verformung sind dabei Vakuumtiefziehen, Pressstempel und Druckluft möglich.

Eine weitere Variante der Umformung wird in der DE 10 2007 012146 B4 beschrieben. Hier wird eine Kombination aus Laserstrahl und Scannerspiegel verwendet, um die zu verformende Glasscheibe lokal auf höhere Temperatur zu bringen und durch Einwirkung der Schwerkraft zu verformen. Zusätzlich ist hierbei allerdings eine genaue Temperaturmessung zwingend erforderlich, da die Temperatur die Viskosität und dadurch auch die Verformung direkt steuert. Hierbei handelt es sich zwar um ein formenfreies Verfahren, allerdings wird auch hier kein Grünglas verwendet.

Allen diesen Verfahren ist gemein, dass sie entweder Formen mit sehr guter Oberflächengüte, deren Herstellung sehr aufwendig und teuer ist, eine Nachbearbeitung durch Schleifen und Polieren oder aufwendige Justierungen der Verformungsanlage erfordern. Dies führt zu hohem Aufwand und hohen Kosten.

Zusätzlich ist allen vorgenannten Verfahren zur Umformung gemein, dass die dabei erzielten Verformungen großen Einschränkungen unterworfen sind. So können durch die vorgenannten Verfahren nur große Radienverläufe der Verformung realisiert werden; feine lokale Strukturen lassen sich damit nicht erzielen. Dies liegt insbesondere daran, dass bei feinen lokalen Strukturen die Schwerkraft alleine nicht für eine ausreichende Verformung ausreicht, da die Oberflächenspannung das Glas in Form hält. Für die Erzielung feiner Strukturen ist hierbei das Anlegen äußerer Kräfte F, beispielsweise durch die Verwendung einer Form, notwendig. Für die Verformungstiefe bzw. je nach Ausführungsform auch Verformungshöhe T einer Verformung gilt dabei der folgende Zusammenhang,

$$T = (Ad\rho Bg+F)/(\gamma l),$$

wobei

A = abgesenkte Fläche des Ausgangsglases in $m^2$,
$\rho$ = Glasdichte in $kg/m^3$,
g = 9,81 $m/s^2$,
$\gamma$ = Oberflächenspannung des Ausgangsglases im geschmolzenen Zustand in N/m
d = Dicke des Ausgangsglases in m,
B = Breite der Verformung in m,
l = Umfang der Verformung in m,
F = Summe der äußeren Kräfte in N.

Werden für die Umformung des Glases allerdings Formen verwendet, wie beispielsweise in der DE 10 2010 020 439 A1, so kommt es oft zur Bildung von Oberflächenfehlern, sogenannten Pits.

Eine weitere Schwierigkeit der Umformung von Artikeln aus Grünglas bzw. Glaskeramik besteht insbesondere darin, dass bei der Erwärmung zunächst der Bereich der Keimbildung durchfahren wird. Um eine homogene Ausbildung der Keramisierung und somit letztlich homogene Eigenschaften der resultierenden Glaskeramikplatte zu erhalten, ist es von großer Wichtigkeit, den kritischen Temperaturbereich der Keimbildung zügig zu durchfahren. Dieser Bereich ist charakterisiert durch die Ausbildung zahlreicher Kristallisationskeime im als Ausgangsglas bereitgestellten Grünglas und liegt beispielsweise für übliche LAS-Glaskeramiken im Bereich von 700-850°C.

Aufgabe der Erfindung ist es somit, ein Verfahren zur formfreien Herstellung eines geformten Grünglas- bzw. Glaskeramikartikels mit vorbestimmter Geometrie zu finden, das die beschriebenen Nachteile des Standes der Technik überwindet und in einem Grünglas bzw. einer Glaskeramik die Herstellung feiner lokaler Strukturen mit hoher Oberflächengüte und homogenen Eigenschaften, insbesondere hinsichtlich homogener Keimbildung bzw. Kristallisation, ermöglicht. Weiterhin ist es die Aufgabe der Erfindung, geformte Grünglas- bzw. Glaskeramikartikel mit hoher Oberflächengüte im geformten Bereich kostengünstig und einfach herzustellen und insbesondere Nachbearbeitungsschritte oder aufwendige Temperaturmessungen zu vermeiden.

Überraschend hat sich gezeigt, dass die Aufgabe sehr einfach gemäß Anspruch 9 durch ein Verfahren zur formfreien Herstellung eines geformten Grünglas- bzw. Glaskeramikartikels mit vorbestimmter Geometrie gelöst werden kann, wobei das Verfahren wenigstens folgende Schritte aufweist:

- Bereitstellung eines scheibenförmigen Ausgangsglases mit der Zusammensetzung eines Grünglases,
- Halten des Ausgangsglases,
- Erwärmung eines Teilbereiches des Ausgangsglases so, dass in diesem Teilbereich eine Viskosität des Ausgangsglases von $10^9$ bis $10^4$ dPas, insbesondere von $10^8$ bis $10^4$ dPas, erhalten wird und so, dass eine Viskosität des Ausgangsglases an den Stellen, an denen das Ausgangsglas gehalten wird, von $10^{12}$ dPas, bevorzugt von $10^{13}$ dPas nicht unterschritten wird, wobei das Erwärmen mittels wenigstens eines Laserstrahls entlang einer geschlossenen Linie erfolgt, wobei der für die Keimbildung des Grünglases relevante Temperaturbereich von 700-850°C, gekennzeichnet durch starke Bildung von Kristallisationskeimen, innerhalb weniger, vorzugsweise innerhalb von höchstens 50 Sekunden durchschritten wird, und

- Verformung des erwärmten Ausgangsglases durch äußere Krafteinwirkung, bis die vorbestimmte Geometrie des Glasartikels erreicht ist, sowie optional
- die Umwandlung des umgeformten Grünglases in eine Glaskeramik mittels Keramisierung.

Gelöst wird die Aufgabe weiterhin durch einen geformten, aus einem Ausgangsglas erhaltenen Grünglas- bzw. Glaskeramikartikel, der wenigstens eine Verformung einer Verformungstiefe T (bzw. je nach Ausführungsform auch Verformungshöhe) aufweist, für die gilt

$$T > (Ad\rho Bg)/(\gamma l),$$

wobei

A = abgesenkte oder erhöhte Fläche des Ausgangsglases in $m^2$,

$\rho$ = Glasdichte in $kg/m^3$,

g = 9,81 $m/s^2$,

$\gamma$ = Oberflächenspannung des Ausgangsglases im geschmolzenen Zustand in N/m

d = Dicke des Ausgangsglases in m,

B = Breite der Verformung in m,

l = Umfang der Verformung in m, wobei die Oberfläche des geformten Grünglas- oder Glaskeramikartikels nach dem Verformen im umgeformten Bereich keine Störstellen von > 1 $\mu$m, insbesondere > 0,1 $\mu$m aufweist.

A, d, $\rho$, B, $\gamma$ und l können am geformten Grünglas- bzw. Glaskeramikartikel gemessen werden, wobei die beim Glaskeramikartikel erhaltenen Längenwerte ggf. mit einem Umrechnungsfaktor unter Berücksichtigung des bei der Keramisierung auftretenden Schrumpfes korrigiert werden können.

Mit Störstellen sind im wesentlichen Oberflächenfehler gemeint, die durch Formenkontakt entstehen können.

Mit dem Begriff formfrei im Sinne der Erfindung ist gemeint, dass der erwärmte Teilbereich nicht mit einer Form in Kontakt kommt.

Als Ausgangsglas wird ein Glas mit der Zusammensetzung eines Grünglases verwendet, wobei ein Grünglas im Rahmen der Erfindung ein Glas bezeichnet, das durch eine gezielte Wärmebehandlung oder Keramisierung in eine Glaskeramik umgewandelt werden kann.

Bevorzugt wird als Ausgangsglas ein Lithium-AluminiumSilikat-Glas verwendet.

Bevorzugt weist das Lithium-Aluminium-Silikatglas die folgende Zusammensetzung auf:

| | |
|---|---|
| 60 - 73,0 Gew.-% | $SiO_2$, |
| 15 - 25,0 Gew.-% | $Al_2O_3$, |
| 2,2 - 5,0 Gew.-% | $Li_2O$, |
| 0 - 5,0 Gew.-% | CaO + SrO + BaO, |
| 0 - 5,0 Gew.-% | $TiO_2$, |
| 0 - 5,0 Gew.-% | $ZrO_2$, |
| 0 - 4,0 Gew.-% | ZnO |
| 0 - 3,0 Gew.-% | $Sb_2O_3$, |
| 0 - 3,0 Gew.-% | MgO, |
| 0 - 3,0 Gew.-% | $SnO_2$. |
| 0 - 9,0 Gew.-% | $P_2O_5$, |
| 0 - 1,5 Gew.-% | $As_2O_3$, |
| 0 - 1,2 Gew.-% | $Na_2O + K_2O$, wobei die jeweiligen Anteile innerhalb der nachfolgend angegebenen Bereiche liegen, |
| 0 - 1,0 Gew.-% | $Na_2O$, |
| 0 - 0,5 Gew.-% | $K_2O$ sowie |
| 0 - 1,0 Gew.-% | färbende Oxide. |

Gemäß einer bevorzugten Ausführungsform der Erfindung wird der Grünglasartikel nach erfolgter Umformung entspannt, um während der Umformung aufgetretene Spannung im Glas abzubauen. Die Entspannung des Glases erfolgt dabei bevorzugt bei einer Temperatur kurz oberhalb von $T_G$. $T_G$ bezeichnet dabei die Glasübergangstemperatur bzw. den Transformationspunkt des Glases und ist in der Regel gekennzeichnet durch eine Viskosität zwischen $10^{12}$ und $10^{13}$ dPas.

Gemäß einer weiteren Ausgestaltung des Verfahrens wird das Ausgangsglas vorgeheizt. Dies erfolgt vorzugsweise in einem separaten Ofen. Die Temperatur der Vorwärmung $T_V$ liegt dabei vorzugsweise auf einer Temperatur von höchstens 150K unterhalb der unteren Temperatur $T_U$ des Temperaturbereichs, bei dem die Bildung von Kristallisationskeimen beginnt. $T_U$ wird im Rahmen dieser Anmeldung als untere Keimbildungstemperatur bezeichnet.

In einer bevorzugten Ausführungsform erfolgt die Vorwärmung des Ausgangsglases auf eine Temperatur von mindestens 300°C, vorzugsweise auf eine Temperatur bis 450°C, je nach umzuformender Geometrie auch bis kurz oberhalb von $T_G$. Dieses Vorwärmen ist günstig, um die gewünschte Temperatur für das Erzeugen der Absenkung schnell zu erreichen. Besonders bei der Umformung eines Glaselements ergibt sich hier der Vorteil, dass der Temperaturbereich der Keimbildung schnell durchschritten wird, so dass eine vorzeitige Keramisierung unterdrückt wird. Insbesondere werden dabei auch nach der Abkühlung auftretende mechanische Spannungen minimiert, da der zur Umformung erforderliche Temperaturhub verkleinert wird.

Gemäß einer Ausgestaltung des Verfahrens wird der umgeformte Grünglasartikel in einem nachfolgenden Schritt durch eine Keramisierung in eine Glaskeramik überführt.

Bevorzugt werden die Erwärmungsparameter, insbesondere die zu erhaltende Viskosität des Ausgangsglases im zu verformenden Teilbereich, und die Verformungsparameter, insbesondere Verformungszeit und -kraft, so gewählt, dass die Verformung zum Stillstand kommt, wenn die gewünschte Geometrie des Ausgangsglases erhalten wurde.

Die Erwärmung des Teilbereiches erfolgt gemäß einer weiteren Ausgestaltung des Verfahrens unterstützend mittels wenigstens eines Brenners oder mittels IR-Strahlung.

Die Erwärmung des Teilbereichs kann gemäß einer weiteren Ausführung auch mittels eines Laserstrahls erfolgen, wobei der Teilbereich gemäß einer Ausführungsform mit einer Frequenz des Laserstrahls von mindestens 2 Hz abgetastet, oder mittels Festoptik kontinuierlich bestrahlt wird.

Bevorzugt werden Laser mit einer Wellenlänge zwischen ca. 1 μm und ca. 5 μm verwendet, beispielsweise ein Diodenlaser mit einer Wellenlänge von ca. 1 μm. Auf diese Weise ist es möglich, das Ausgangsglas, beispielsweise Grünglas, lokal scharf begrenzt und mit großem Temperaturgradienten aufzuheizen. Günstig hierbei ist die Verwendung einer Laserwellenlänge, bei der das umzuformende Ausgangsglas einen Absorptionsgrad zwischen 10 und 90% besitzt. Für die Ausbildung einer Absenkung ist es dabei bevorzugt, wenn eine Laserwellenlänge mit einem niedrigen Absorptionsgrad zwischen 10 und 50% verwendet wird, da so der Energieeintrag über die Dicke des Ausgangsglases relativ konstant ist.

Der gesamte Teilbereich kann gleichzeitig oder in einer zeitlichen Abfolge erwärmt werden.

Die Erwärmung erfolgt bevorzugt entlang einer geschlossenen Linie.

Die Erwärmung kann dergestalt erfolgen, dass zwischen dem zu verformenden Teilbereich und den restlichen Bereichen des Ausgangsglases ein vorbestimmter Wärmegradient eingestellt wird.

Dieser Wärmegradient wird bevorzugt mittels geeigneter Messverfahren, insbesondere eines Wärmebildsensors, gemessen. Zusätzlich oder alternativ kann die Verformung mittels geeigneter Messverfahren, insbesondere mittels optischer und/oder akustischer Sensoren, gemessen werden.

Die zur Verformung angelegte äußere Kraft F kann insbesondere durch Vakuumtiefziehen oder Pressblasen auf das erwärmte Ausgangsglas erfolgen.

Die zur Verformung angelegte äußere Kraft kann durch ein Druckgefälle über dem Ausgangsglas ausgeübt werden.

Die zur Verformung angelegte äußere Kraft kann ebenfalls über einen mechanischen Stempel oder über eine Vakuumform mit Ausfräsung übertragen werden, wobei der Stempel bzw. die Form vorzugsweise nur mit den Stellen der Glasscheibe Kontakt hat, die auf hoher Viskosität, d.h. auf einer Temperatur kleiner oder gleich $T_G$ bzw. einer Viskosität von nicht kleiner als $10^{12}$ dPas, bevorzugt nicht kleiner als $10^{13}$ dPas liegen.

Der erhaltene Grünglas- bzw. Glaskeramikartikel weist vorzugsweise keine Störstellen (Pits) mit einer Abmessung von > 1 μm, insbesondere von > 0,1 μm an der Oberfläche des umgeformten Bereichs auf. Als umgeformter Bereich wird dabei der Bereich bezeichnet, der während der Umformung eine Viskosität von $10^9$ bis $10^4$ dPas innehatte.

Die Umformung des scheibenförmigen Ausgangsglases erfolgt dabei dergestalt, dass im Umformungsbereich, der gekennzeichnet ist durch eine Viskosität während der Umformung von $10^9$ bis $10^4$ dPas, bevorzugt von $10^8$ bis $10^4$ dPas, die erhaltene Verformung derart ausgebildet ist, dass der Oberflächenverlauf des erfindungsgemäß erhaltenen Grünglas- oder Glaskeramikartikels im Bereich der Verformung runde Verformungskanten aufweist, die durch Krümmungs- bzw. Verformungsradien beschrieben werden können. Der erhaltene Grünglas- bzw. Glaskeramikartikel weist dabei Verformungsradien im Bereich von 0,4 bis 15 mm auf.

Erfindungsgemäß kann der nach den erfindungsgemäßen Verfahren hergestellte Grünglas- bzw. Glaskeramikartikel für die Anwendung als Glaskeramikkochfläche verwendet werden.

Die erhaltene Verformung der Oberfläche des Grünglases bzw. der Glaskeramik in den umgeformten Bereichen kann dabei sowohl als Vertiefung als auch als Erhöhung ausgebildet sein.

Bevorzugt erfolgt diese Verformung des Grünglases bzw. der Glaskeramik entlang einer Linie.

Bevorzugt ist die erzielte Verformung des Grünglases bzw. der Glaskeramik 0,1 bis 2,5 mm tief bzw. je nach Ausführungsform 0,1 bis 2,5 mm hoch.

Gemäß einer weiteren bevorzugten Ausführungsform der Erfindung wird mit dem Verfahren zur formfreien Herstellung eines geformten Grünglas- oder Glaskeramikartikels mit vorbestimmter Geometrie ein Grünglas- oder Glaskeramikartikel erhalten, welcher mindestens eine Dekoration aufweist, welche aus einer Druckfarbe gebildet ist. Hierfür umfasst das Verfahren die folgenden Schritte:

- Bereitstellen eines scheibenförmigen Ausgangsglases,
- Halten des Ausgangsglases,
- Erwärmen des Ausgangsglases so, dass in diesem Teilbereich eine Viskosität des Ausgangsglases von $10^9$ bis $10^4$ dPas, insbesondere von $10^8$ bis $10^4$ dPas erhalten wird und so, dass eine Viskosität des Ausgangsglases an den Stellen, an denen das Ausgangsglas gehalten wird, von $10^{12}$ dPas, bevorzugt von $10^{13}$ dPas, nicht unterschritten wird, wobei das Erwärmen mittels wenigstens eines Laserstrahls entlang einer geschlossenen Linie und dergestalt erfolgt, dass der für die Keimbildung relevante Temperaturbereich, gekennzeichnet durch starke Bildung von Kristallisationskeimen, in höchstens 50 Sekunden durchfahren wird,
- Verformen des erwärmten Ausgangsglases durch äußere Krafteinwirkung, bis die vorbestimmte Geometrie des Glasartikels erreicht ist, und
- Auftrag mindestens einer Druckfarbe auf einen vorbestimmten Bereich des Ausgangsglases, sowie
- optional die Umwandlung des Grünglases in eine Glaskeramik durch eine anschließende Keramisierung.

Eine keramische Farbe stellt hierbei eine Farbe dar, welche aus einem Glasfluss sowie färbenden Bestandteilen gebildet ist. Beispielhaft sind solche keramischen Farben beispielsweise beschrieben in der DE 198 34 801 A1. Weiterhinkönnen aber auch andere Druckfarben, beispielsweise handelsübliche organische Druckfarben, oder halborganische Druckfarben wie beispielsweise Sol-Gel-Farben, verwendet werden.

Gemäß einer nochmals weiteren bevorzugten Ausführungsform der Erfindung erfolgt der Auftrag der mindestens einen Druckfarbe durch ein Druckverfahren, bevorzugt einen Siebdruck, einen Tampondruck und/oder einen Strahldruck, beispielsweise einen Tintenstrahldruck.

Gemäß einer weiteren Ausführungsform der Erfindung ist die mindestens eine Druckfarbe auch im Bereich der Verformung aufgetragen, wobei die Verformung ausgebildet ist als Vertiefung oder als Erhöhung, wobei die Erhöhung eine maximale Höhe von 0,5 mm aufweist und weiterhin der Auftrag der Farbe mittels Siebdruck erfolgt.

Je nach genauer Verfahrensführung ist es hierbei möglich, die Druckfarbe zur Erzeugung der Dekoration bereits vor der Umformung des Ausgangsglases aufzutragen. Allerdings ist es ebenfalls möglich, die Dekoration erst nach der erfolgten Umformung aufzutragen.

Zur Vermeidung der Überhitzung der Dekoration bleibt dabei die Wärmeeinflusszone des Grünglas- oder Glaskeramikartikels frei, d.h. der Bereich, bei welchem die Oberflächentemperatur des umzuformenden Substrats die maximal zulässige Temperatur der aufgebrachten Farbe übersteigt. Die maximale zulässige Temperatur ist dabei definiert als die Temperatur, bei welcher die Eigenschaften der Farbe sich irreversibel verändern, beispielsweise durch eine Farbveränderung von Pigmenten, der Zersetzung eines organischen Bindemittels oder ähnliches.

Wird der erhaltene umgeformte Glaskeramikartikel als Kochfläche verwendet, werden elektronische Elemente mit Bedienfunktion für die Kochfläche, beispielsweise Sensoren oder elektrooptische Elemente mit Anzeigefunktion (sogenannte Displays), im Bereich der Umformung, d.h. des abgesenkten Bereichs, platziert. Dies hat zum einen den Vorteil, dass die thermische Belastung auf die Bedienelemente, die beim Betrieb der Kochfläche bzw. beim Hantieren mit heißen Kochgeräten erfolgt, durch die Vertiefung und den dadurch resultierenden Luftspalt zwischen Glaskeramik und Topf, der wie eine thermische Isolation wirkt, reduziert wird.

Zum anderen hat sich überraschend gezeigt, dass die erfindungsgemäß hergestellten Grünglas- bzw. Glaskeramikartikel je nach genauer Prozessführung in der Verformung eine plankonvexe Oberfläche aufweisen. Handelt es sich bei dem Bedienelement um ein elektrooptisches Anzeigeelement, wird durch die hohe Oberflächengüte des erfindungsgemäß umgeformten Bereichs sowie seine leicht plankonvexe Form dabei eine brillante Durchsicht darauf ermöglicht.

Je nach genauer Prozessführung kann aber auch eine andere Form der Oberfläche der Verformung hergestellt werden. So ist es neben einer geraden Oberfläche möglich, Verformungen mit umlaufender Einbuchtung am Rand zu erhalten oder eine konkav gekrümmte Oberfläche einzustellen. Auch Kombinationen dieser Merkmale sind möglich. Solche Oberflächenstrukturen sind insbesondere für die Haptik der Kochfläche relevant und erhöhen somit deren Bedienkomfort.

Ausführungsbeispiele

Fig.1 zeigt ein Flussdiagramm mit bevorzugten Verfahrensschritten.

Fig.2 zeigt die Herstellung einer Verformung in einem Grünglas, das während der Verformung außen gehalten wird, sowie einen erfindungsgemäßen Grünglas- oder Glaskeramikartikel, wobei im oberen Teil die Aufsicht, im unteren Teil dagegen ein Querschnitt durch den Glasartikel entlang der Linie A-B gezeigt wird.

Die Fig. 3 bis 5 zeigen im Querschnittsprofil schematisch mögliche Bodenformen der erfindungsgemäß hergestellten Verformung.

Die Fig. 6 zeigt die Transmissionskurve eines erfindungsgemäßen scheibenförmigen Ausgangsglases von ungefähr 4 Millimetern Dicke.

Die Fig. 7 zeigt Erläuterungen zum Messverfahren zur Bestimmung des Oberflächenverlaufs erfindungsgemäß erhaltener Verformungen.

Die Fig. 8 bis 15 zeigen erhaltene Konturenscans erfindungsgemäß erhaltener Verformungen sowie fotographische Darstellungen ausgewählter erfindungsgemäß erhaltener Verformungen.

Die Fig. 16 zeigt im Querschnittsprofil schematisch die erfindungsgemäß hergestellte Verformung auf einem Grünglas- oder Glaskeramikartikel, welcher weiterhin eine Dekoration aus einer Druckfarbe aufweist.

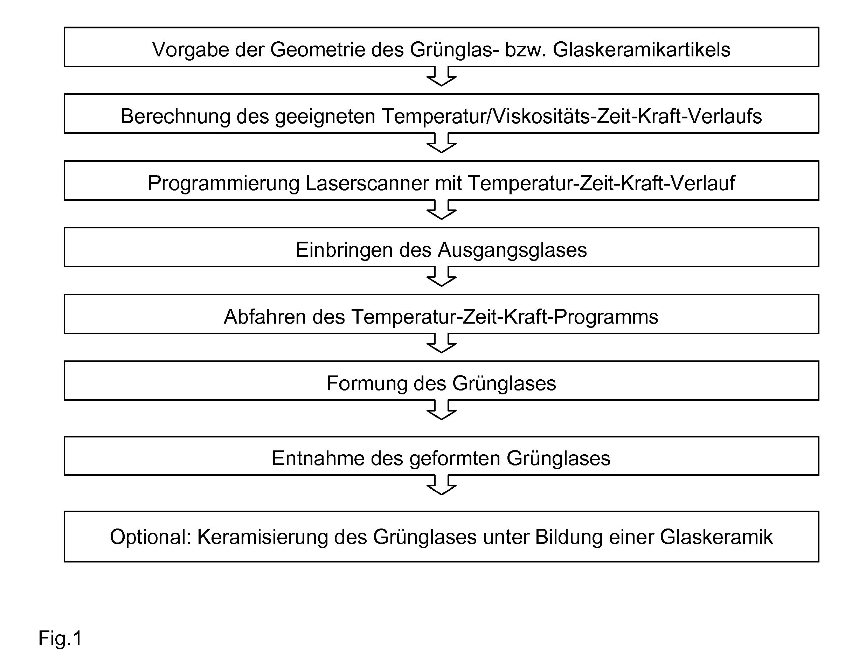

In Fig. 1 ist beispielhaft ein Flussdiagramm mit bevorzugten Verfahrenschritten zur formfreien Herstellung des geformten Grünglas- bzw. Glaskeramikartikels dargestellt. Zunächst erfolgt dabei die Vorgabe der gewünschten Geometrie. Im nächsten Schritt wird berechnet, welche Temperatur und welche Kraft wie lange ausgeübt werden muss, um die gewünschte Verformung zu erzielen (Temperatur- bzw. Viskositäts-Zeit-Kraft-Verlauf). Die Erwärmung soll mittels eines Laserstrahls erfolgen, so dass im nächsten Schritt die Programmierung eines Laserscanners mit den in Schritt 2 errechneten Daten erfolgt. Die Krafteinwirkung wird über die Einstellung eines Druckgefälles über das scheibenförmige Ausgangsglas eingestellt. In Schritt 4 wird das Ausgangsglas bereitgestellt und gehalten, um im nächsten Schritt schließlich das entsprechende Formungsprogramm abzufahren, wobei der Temperaturbereich der Keimbildung, gekennzeichnet durch die Bildung zahlreicher Kristallisationskeime, innerhalb weniger, vorzugsweise innerhalb höchstens 50, Sekunden durchfahren wird. Auf diese Weise wird in Schritt 6 das Grünglas geformt. In Schritt 7 wird das geformte Grünglas entnommen. Optional schließt sich in einem weiteren Schritt die Keramisierung des Grünglases unter Bildung einer Glaskeramik an.

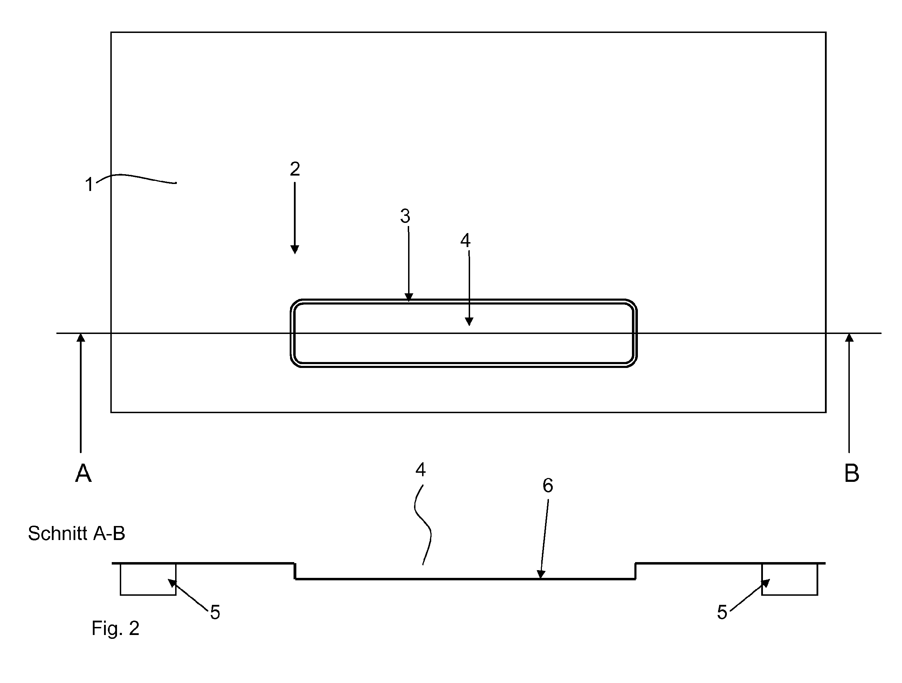

Fig. 2 zeigt schematisch eine Verformung 4 in einem Grünglas (verformtes Grünglas 1), das während der Verformung außen mit Hilfe der Halter 5 gehalten wird. Die Erwärmung des Ausgangsglases erfolgt dabei im Teilbereich 2 auf eine Temperatur, dass in diesem Teilbereich eine Viskosität von $10^{13}$ bis $10^7$ dPas erhalten wird, während im Teilbereich 3 eine Viskosität von $10^9$ bis $10^4$ dPas, bevorzugt von $10^8$ bis $10^4$ dPas, eingestellt wird. Im Bereich der Halter 5 wird eine Viskosität des Ausgangsglases von $10^{12}$ dPas, bevorzugt von $10^{13}$ dPas, nicht unterschritten. Das so erwärmte Ausgangsglas wird durch die Einwirkung der Kombination aus Eigengewicht und einer äußeren Kraft so lange verformt, bis die vorherbestimmte Geometrie des Grünglases erhalten wird.

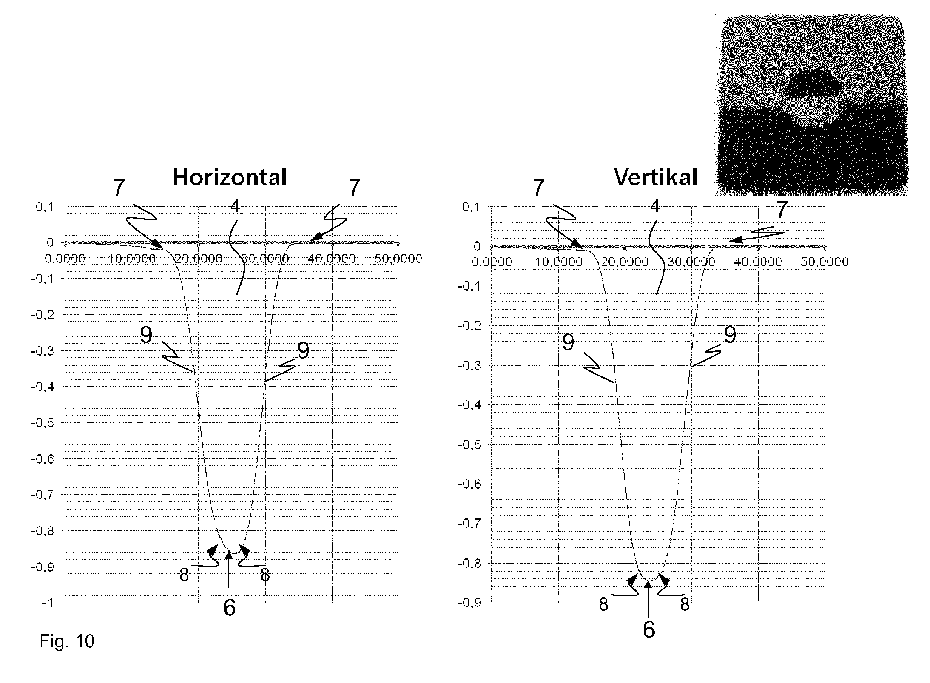

Sofern die Erwärmung dergestalt erfolgt, dass es zu einer Verformung 4 kommt, welche einen Boden 6 aufweist, der relativ zur ursprünglichen Oberfläche des Ausgangsglases lediglich verschoben wurde, weist auch dieser Boden 6 während der Verformung eine Viskosität von $10^{13}$ bis $10^7$ dPas auf, also eine Viskosität entsprechend des Teilbereichs 2. Sofern allerdings eine Umformung erfolgt, bei welcher der Boden 6 selbst ebenfalls verformt vorliegt, weist dieser während der Umformung eine Viskosität zwischen $10^9$ und $10^4$ dPas, bevorzugt von $10^8$ bis $10^4$ dPas, auf, also entsprechend des Teilbereichs 3 (siehe hierzu auch Fig. 10) .

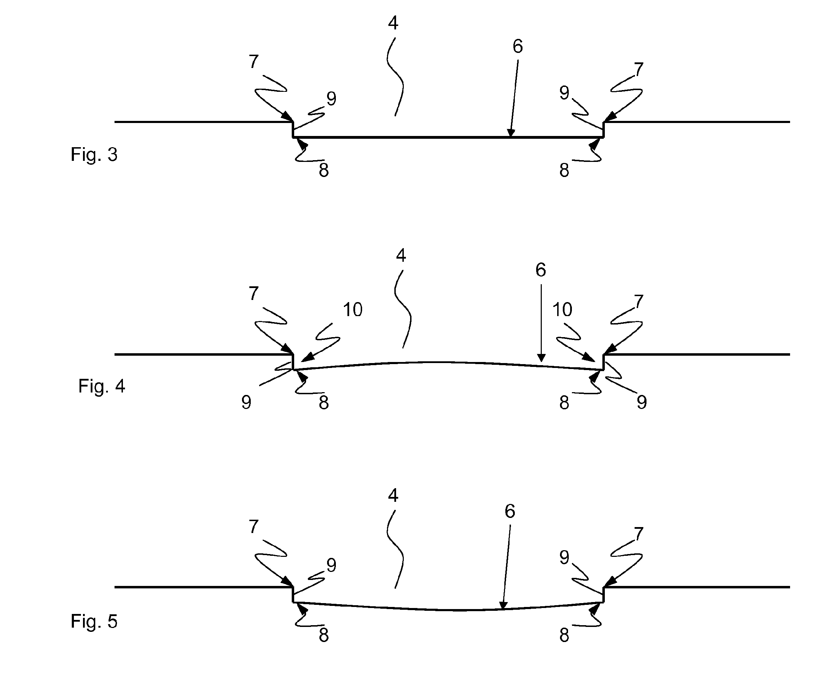

Die Fig. 3 bis 5 zeigen schematisch mögliche Formen des Oberflächenverlaufs innerhalb der Verformung 4, beispielhaft ausgebildet als Vertiefung, im Querschnitt:

Fig. 3 zeigt schematisch den Oberflächenverlauf des umgeformten Grünglases in Form eines Querschnittprofils. Der Boden 6 ist dabei als gerade, nicht gekrümmte Oberfläche ausgebildet. Gezeigt sind weiterhin die Schultern 7 und die Ränder 8 des Querschnittprofils der Verformung. Als Schulter 7 wird dabei im Rahmen dieser Anmeldung der Bereich des geformten Grünglas- oder Glaskeramikartikels 1 bezeichnet, bei dem es im Querschnittprofil zu einem Übergang von einem höhergelegenen Bereich zu einem tiefergelegenen Bereich des umgeformten Grünglas- oder Glaskeramikartikels 1 kommt, und als Rand 8 der Bereich des geformten Grünglas- oder Glaskeramikartikels 1, bei dem die Wand 9 der Verformung 4 in den tiefergelegenen Bereich übergeht, bezeichnet. Als Boden 6 der Verformung 4 wird dabei der Bereich des umgeformten Grünglas- oder Glaskeramikartikels 1 bezeichnet, der zwischen den Wänden 9 der Verformung 4 liegt und von diesen begrenzt wird.

In Fig. 4 ist schematisch der Oberflächenverlauf der Verformung 4 dargestellt, bei der der Boden 6 konvex nach oben gewölbt ist. Gezeigt sind die Schultern 7, Ränder 8 und Wände 9 sowie eine umlaufende Einbuchtung 10 innerhalb der Verformung 4, die rund um deren Boden 6 verläuft. Diese liegt insbesondere bei einer konvex nach oben gewölbten Form der Oberfläche innerhalb der Verformung 4 vor und wird in weiteren Ausführungsbeispielen anhand von Konturenscans erfindungsgemäß hergestellter Proben weiter erläutert.

In Fig. 5 ist der Boden 6 konkav nach unten gewölbt. Gezeigt sind weiterhin Schultern 7, Ränder 8 und Wände 9 der Verformung 4.

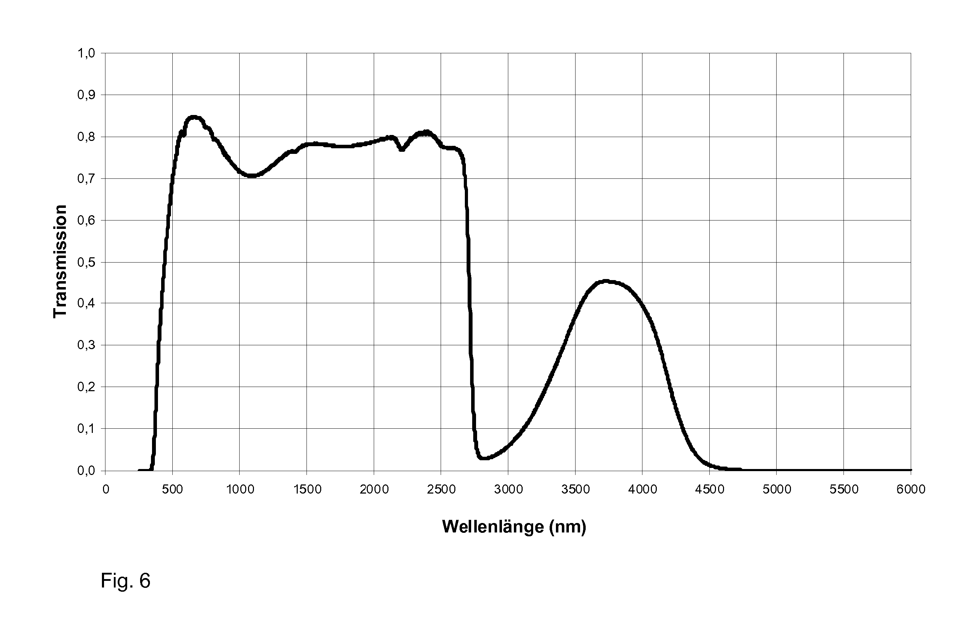

In Fig. 6 sind die optischen Transmissionsdaten für ein scheibenförmiges Glas mit einer Dicke von ungefähr 4 mm aufgeführt, das als erfindungsgemäßes Ausgangsglas verwendet werden kann. Die Daten wurden für ein beidseitig glattes Glas ermittelt.

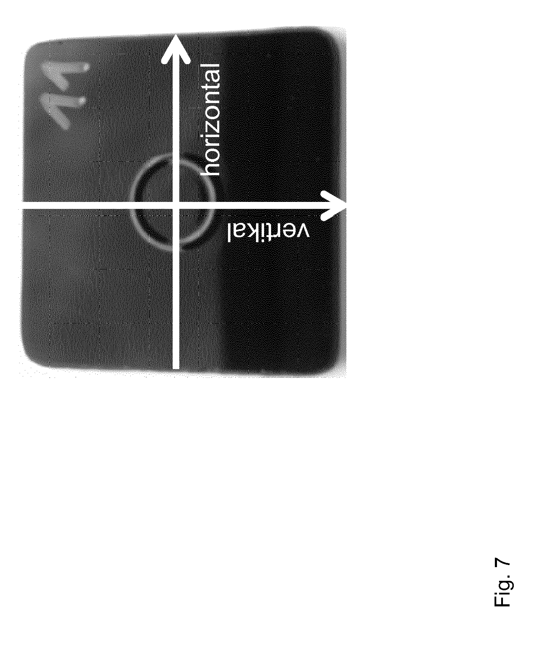

Die Fig. 7 zeigt eine fotographische Abbildung einer beispielhaften Probe mit den ungefähren Abmessungen 50mm*50mm. Die Messung für einen Konturenscan für eine erfindungsgemäß erhaltene Verformung erfolgt hier in Richtung der eingezeichneten Pfeile von rechts nach links in horizontaler Richtung bzw. von oben nach unten in vertikaler Richtung dergestalt, dass die umgeformte Kontur mittig durchfahren wird. Die Messstrecke umfasst ungefähr 45 mm, die Auflösung beträgt 5 $\mu$m. Die Zahl der Messpunkte ergibt sich zu 9039.

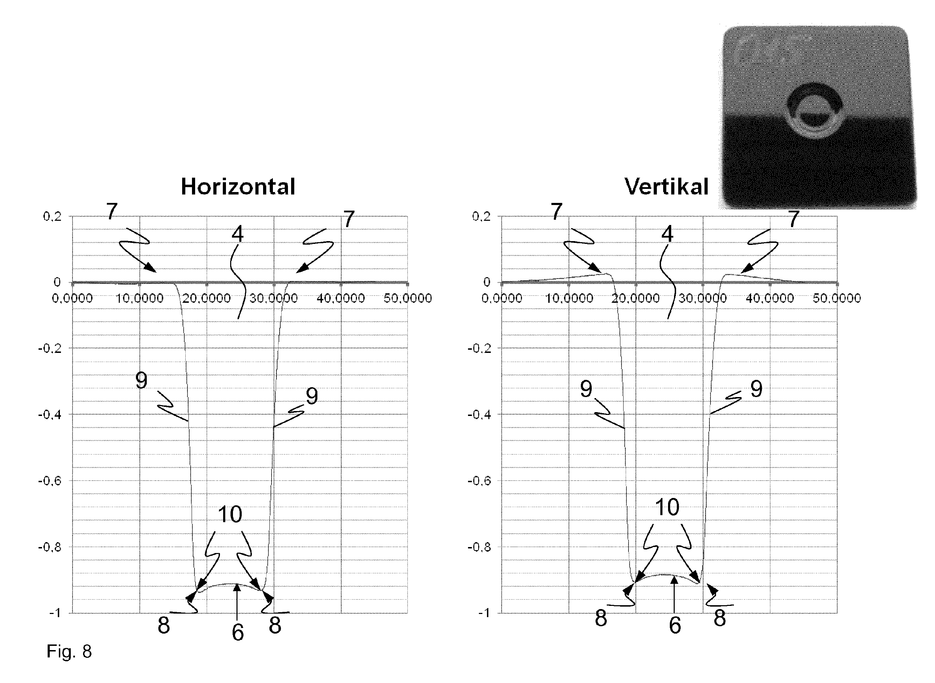

In Fig. 8 ist oben eine fotographische Aufnahme einer Probe mit den ungefähren Abmessungen 50mm*50mm gezeigt, bei der mit dem erfindungsgemäßen Verfahren mittig eine runde Verformung 4, ausgebildet als Vertiefung, erhalten wurde. Die Achsen der graphischen Darstellungen bezeichnen jeweils mm. Die Probe wurde nach der Umformung keramisiert. Ebenfalls dargestellt sind zwei Konturenscans der erhaltenen Verformung 4, welche entlang zweier zueinander senkrechter Strecken auf der Oberfläche der Glaskeramik gemessen wurden. Der linke Scan zeigt dabei den Verlauf der Oberflächenform in horizontaler, der rechte in vertikaler Richtung. Deutlich erkennbar ist die konvexe Form des Oberflächenverlaufs innerhalb der Verformung 4 mit einer innerhalb der Verformung 4 verlaufenden Einbuchtung 10 rund um deren Boden 6. Gezeigt sind weiterhin die ungefähren Lagen der Schultern 7, Ränder 8 und Wände 9. Auffällig ist weiterhin eine leichte Aufwölbung der Oberfläche im Bereich der Schultern 7 beim vertikalen Messverlauf, bevor es zu einer Absenkung der Oberfläche kommt. Deutlich erkennbar ist im Randbereich die umlaufende Einbuchtung 10.

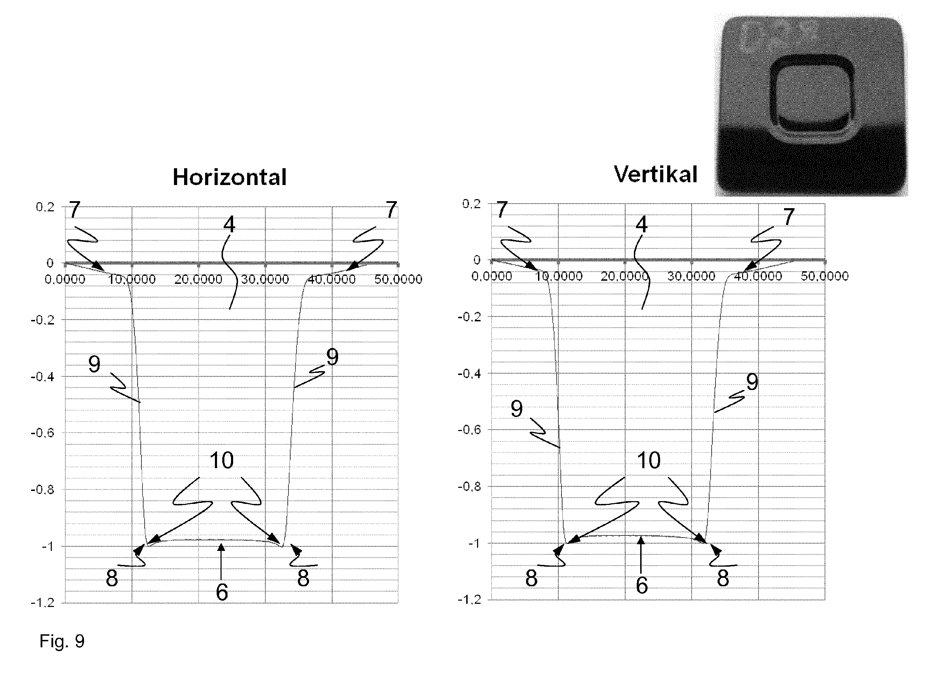

In Fig. 9 ist oben eine fotografische Aufnahme einer weiteren Glaskeramik-Probe mit den ungefähren Abmessungen 50mm*50mm dargestellt, bei der mit dem erfindungsgemäßen Verfahren eine viereckige Verformung 4, ausgebildet als Vertiefung, mit abgerundeten Ecken erhalten wurde. Die Achsen der graphischen Darstellungen bezeichnen jeweils mm. Auch hier erfolgte nach der Umformung die Keramisierung. In den ebenfalls wieder unten abgebildeten Konturenscans, einer in horizontaler, einer in vertikaler Richtung, zeigt sich wieder deutlich erkennbar der konvexe Oberflächenverlauf innerhalb der Verformung 4 sowie die innerhalb der Verformung 4 rund um den Boden 6 verlaufende Einbuchtung 10. Gezeigt sind weiterhin die Lagen der Schultern 7, Ränder 8 und Wände 9.

Fig. 10 zeigt eine weitere erfindungsgemäß erhaltene Verformung 4 auf noch einer weiteren Probe. Die Achsen der graphischen Darstellungen bezeichnen jeweils mm. Hier wurde mit dem erfindungsgemäßen Verfahren eine kreisrunde Absenkung erhalten, bei der der Boden 6 konkav nach unten gewölbt ist. Gezeigt sind weiterhin die Schultern 7 der Verformung 4. Der Bereich des linken Randes 8 geht hier durch die konkave Form des Bodens nahtlos in den Bereich des rechten Randes 8 über, so dass der im Boden 6 erhaltene Radius als Randradius gilt. Bezeichnet sind weiterhin auch die Wände 9 der Verformung 4.

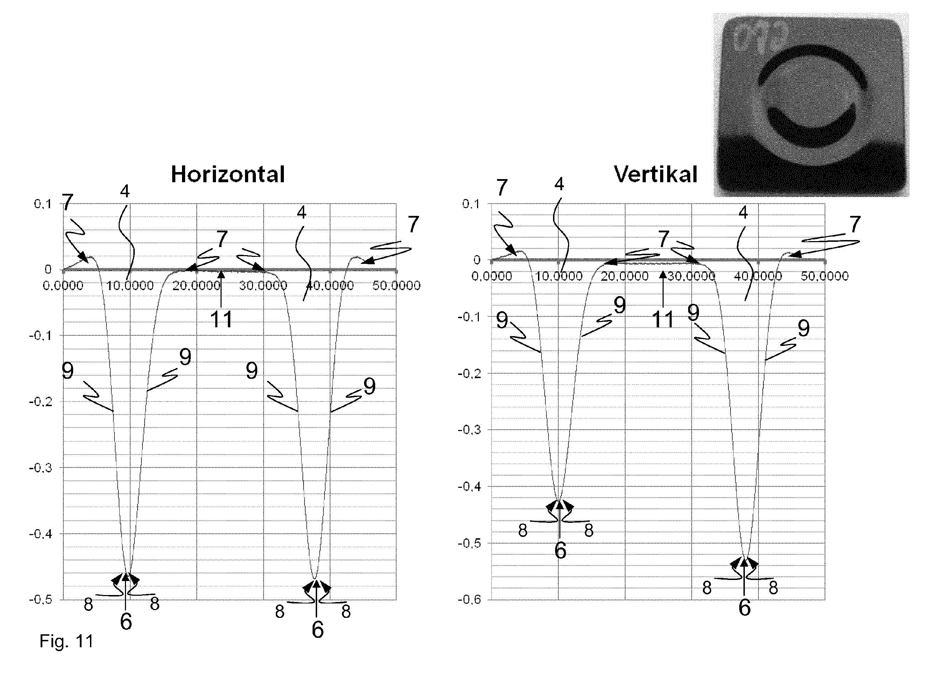

Fig. 11 zeigt eine weitere Ausführung der Erfindung auf einer Glaskeramik-Probe. Die Achsen der graphischen Darstellungen bezeichnen jeweils mm. Die Umformung erfolgte hierbei entlang einer Linie dergestalt, dass als Verformung 4 ein abgesenkter Ring rund um einen im Vergleich zum Oberflächenverlauf vor der Verformung nicht abgesenkten Bereich 11 erhalten wird. Im Bereich der Schultern 7 ist zusätzlich eine leichte Aufwölbung der Oberfläche vor der Verformung 4 erkennbar. Der Boden 6 der Verformung 4 ist konkav nach unten gewölbt. Auch hier geht der linke Rand 8 der Verformung 4 durch die konkave Form des Bodens 6 übergangslos in den rechten Rand 8 über, so dass der im Boden erhaltene Radius als Randradius gilt. Bezeichnet sind weiterhin die Wände 9 der Verformung 4.

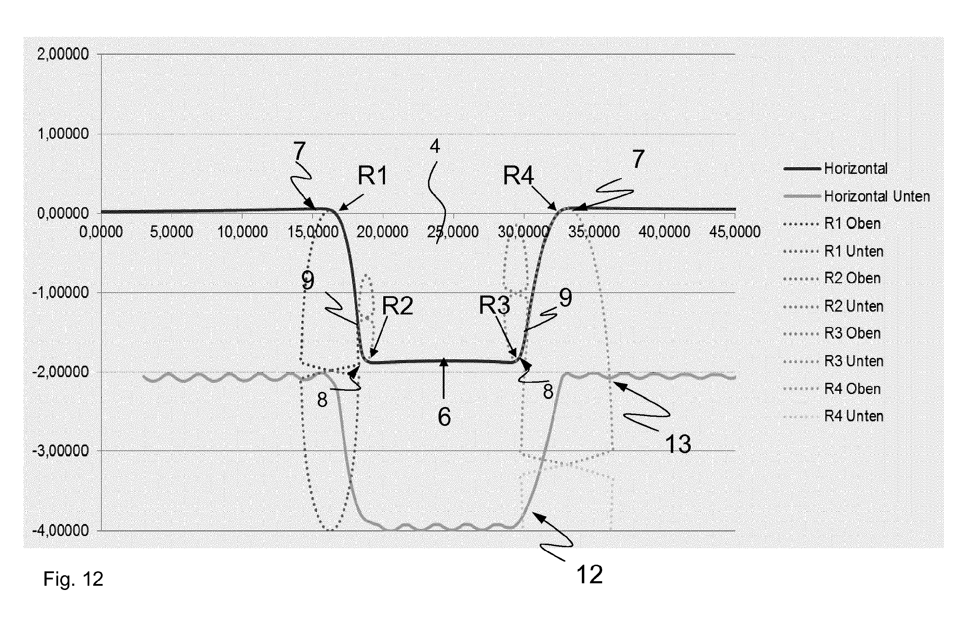

Fig. 12 zeigt einen Konturenscan einer erfindungsgemäß erhaltenen Verformung 4, ausgebildet als Vertiefung, in horizontaler Messrichtung mit ermittelten Radien an einer Probe in nicht keramisiertem (d.h. "grünem") Zustand. Die Achsen der graphischen Darstellungen bezeichnen jeweils mm. Zusätzlich zum Konturverlauf der Oberfläche des umgeformten scheibenförmigen Glases 1 ist weiterhin eine Darstellung des Oberflächenverlaufs der Unterseite 12 dargestellt. Deutlich erkennbar ist hierbei die genoppte Struktur 13 der Unterseite 12 des scheibenförmigen umgeformten Grünglases. Bezeichnet sind weiterhin die Schultern 7, Ränder 8 und Wände 9 der Verformung 4. Anhand dieses Konturenscans wurden die mit R1 bis R4 bezeichneten Verformungsradien von Schultern 7 und Rändern 8 bestimmt. Hierbei wurden folgende Werte, gerundet auf die zweite Nachkommastelle, erhalten:

R1: 2,02 mm
R2: 0,54 mm
R3: 0,85 mm
R4: 3,23 mm

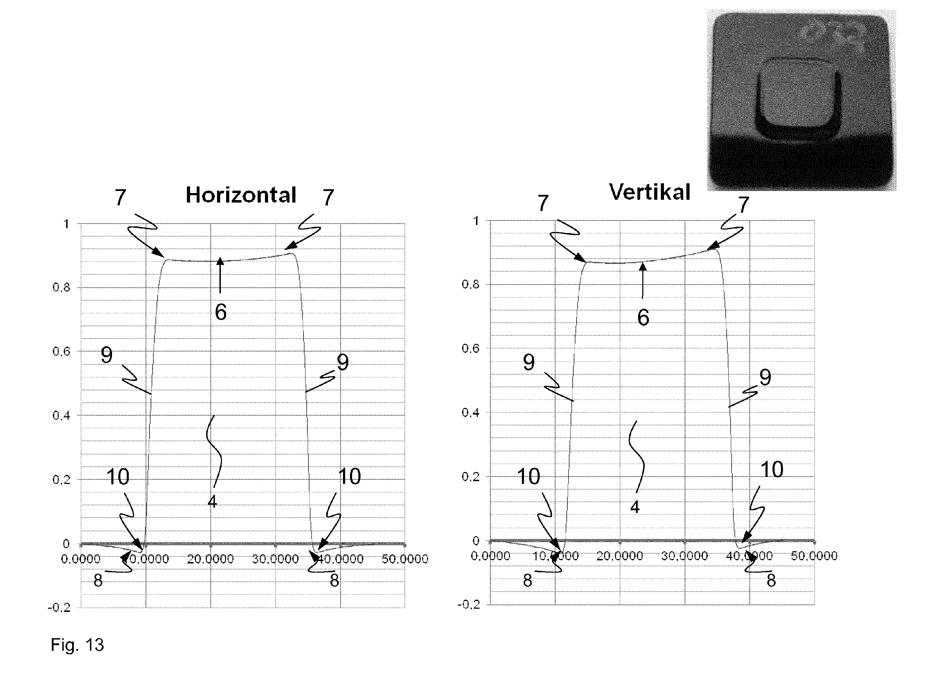

Fig. 13 zeigt eine weitere Ausführungsform der Erfindung auf einer Glaskeramikprobe. Die Achsen der graphischen Darstellungen bezeichnen jeweils mm. Die Verformung 4 ist hierbei in Form einer Erhöhung ausgebildet. Rund um den Boden 6 der Verformung 4 ist auch hierbei eine umlaufende Einbuchtung 10 ausgebildet. Bezeichnet sind ebenfalls die Schultern 7 , Ränder 8 und Wände 9 der Verformung 4.

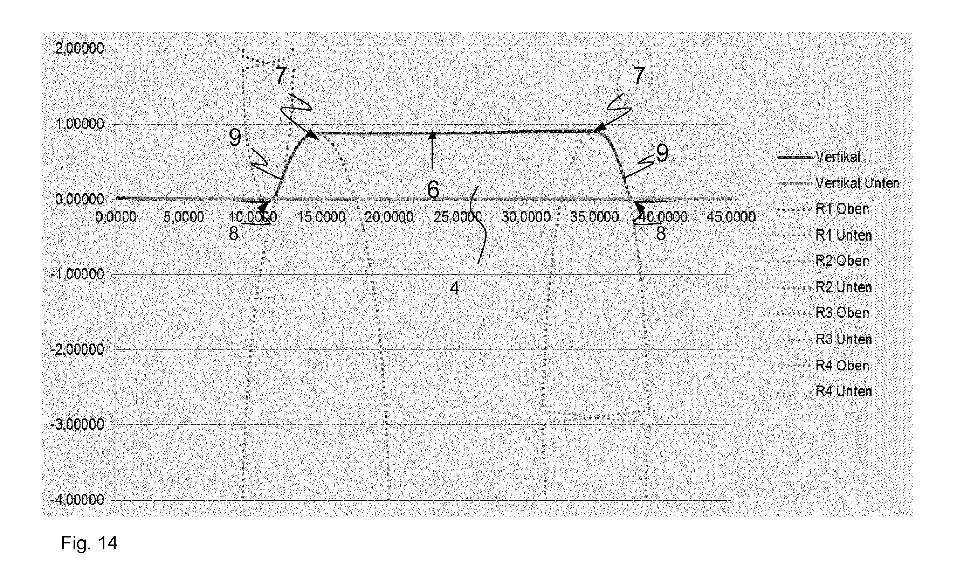

Fig. 14 zeigt einen Konturenscan einer erfindungsgemäß erhaltenen Verformung 4, ausgebildet als Erhöhung. Die Achsen der graphischen Darstellungen bezeichnen jeweils mm. Bezeichnet sind weiterhin die Schultern 7, der Boden 6, die Ränder 8 sowie die Wände 9 der erhaltenen Verformung 4.

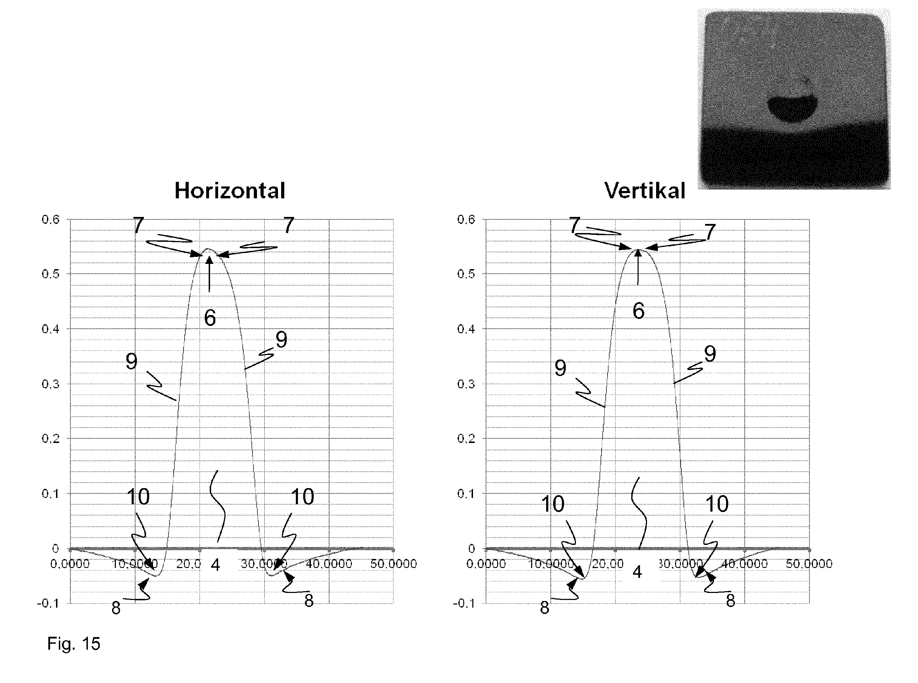

Fig. 15 zeigt eine weitere Ausführungsform der Erfindung an einer Glaskeramikprobe. Die Achsen der graphischen Darstellungen bezeichnen jeweils mm. Die Verformung 4 ist hierbei in Form einer Erhöhung ausgebildet, wobei der Boden 6 eine konvex nach oben gewölbte Form aufweist und dergestalt ausgebildet ist, dass die linke Schulter 7 der Verformung durch die konvexe Form des Bodens 6 nahtlos in die rechte Schulter 7 der Verformung 4 übergeht, so dass der im Boden 6 erhaltene Radius als Schulterradius gilt. Bezeichnet sind ebenfalls die Ränder 8 und Wände 9 der Verformung 4 sowie die rund um den Boden 6 der Verformung 4 verlaufende umlaufende Einbuchtung 10.

Eine genaue Betrachtung der in den Fig. 8 bis 15 dargestellten Konturenscans der erfindungsgemäßen Verformungen 4 zeigt, dass die Verformungsradien im Bereich der Schultern 7 stets größer sind als die Verformungsradien, die für den Bereich der Ränder 8 erhalten werden.

Für ausgewählte Proben sind die Radien von Schulter- bzw. Randbereich, bestimmt jeweils in horizontalem und vertikalem Konturenscan, in der folgenden Tabelle 1 aufgeführt. Die Richtung der Messung ist dabei jeweils durch ein h (für horizontal) bzw. v (für vertikal) hinter der Probennummer angegeben. Die Angabe der Radien erfolgt jeweils in mm. Es wurde auf die zweite Nachkommastelle gerundet.

**Tabelle 1**

| Probennummer | Radius Schulter links $R_{S,l}$ | Radius Rand links $R_{R,l}$ | Radius Rand rechts $R_{R,r}$ | Radius Schulter rechts $R_{S,r}$ |
|---|---|---|---|---|
| 028 h | 4,53 | 1,76 | 2,21 | 5,98 |
| 028 v | 4, 3 | 1,59 | 2,48 | 5,9 |
| 051 h | 4,53 | 1,76 | 2,21 | 5,98 |
| 051 v | 4,27 | 1,59 | 2,48 | 5,9 |
| 072 h | 4,53 | 1,76 | 2,21 | 5,98 |
| 072 v | 4,27 | 1,59 | 2,48 | 5,9 |
| 188 h | 4,72 | 2,11 | 2,45 | 6,21 |
| 188 v | 4,75 | 2,08 | 2,42 | 5,86 |
| 194 h | 3,17 | 0,9 | 1,32 | 4,67 |
| 194 v | 3,25 | 0,93 | 1,26 | 4,62 |
| 197 h | 4,72 | 2,11 | 2,45 | 6,11 |
| 197 v | 4,75 | 2,08 | 2,42 | 5,86 |
| 210 h | 2, 02 | 0,54 | 0,85 | 3,23 |
| 210 v | 2,01 | 0,51 | 0,86 | 3,16 |
| 217 h | 4, 6 | 1,92 | 2,03 | 5,61 |
| 217 v | 4,86 | 1,94 | 2,11 | 5,79 |

Die Ermittlung des Verhältnisses von Schulter- zu Randradien $V_{S/R}$ ergibt, dass dieses für eine erfindungsgemäß erhaltene Verformung stets im Bereich von 2 bis 4 liegt.

Das Verhältnis von Schulter- zu Randradien $V_{S/R}$ ergibt sich dabei zweckmäßig aus der folgenden Formel:

$$V_{S/R} = \frac{(R_{S,l} + R_{S,r})}{(R_{R,l} + R_{R,r})}$$

Allgemein können die lokalen Krümmungsradien mit einer 3-Punkte-Methode aus den Messwerten eines Konturenscans bestimmt werden. Dazu werden Vektoren

$$(1) \qquad \vec{a} = \overrightarrow{BC} = \begin{pmatrix} C_x - B_x \\ C_y - B_y \\ C_z - B_z \end{pmatrix},$$

$$\vec{b} = \overrightarrow{CA} = \begin{pmatrix} A_x - C_x \\ A_y - C_y \\ A_z - C_z \end{pmatrix},$$

$$\vec{c} = \overrightarrow{AB} = \begin{pmatrix} B_x - A_x \\ B_y - A_y \\ B_z - A_z \end{pmatrix},$$

bestimmt, welche Verbindungsvektoren zwischen drei Punkten A, B, C der Kontur, beziehungsweise des Oberflächenprofils darstellen. In der vorstehenden dargestellten Schreibweise weisen die Konturpunkte A, B, C jeweils drei Koordinaten auf. Das Verfahren kann aber auf einen zweidimensionalen Konturenscan, wie ihn Fig. 11 als Beispiel zeigt, ebenso angewendet werden, beispielsweise indem die z-Koordinaten $A_z$, $B_z$, $C_z$ gleich null gesetzt werden.

Mit den Vektoren nach den Gleichungen (1) können dann die Größen

$$(2) \qquad s = \frac{1}{2} * \left( |\vec{a}| + |\vec{b}| + |\vec{c}| \right)$$

und

$$(3) \qquad A = \sqrt{s * (s - |\vec{a}|) * (s - |\vec{b}|) * (s - |\vec{c}|)}$$

aus den Beträgen der Vektoren gebildet werden. Der Krümmungsradius ergibt sich dann als Radius eines Kreises durch die Punkte A, B, C zu

$$(4) \qquad r = \frac{\left( |\vec{a}| * |\vec{b}| * |\vec{c}| \right)}{4A}.$$

Um einen genaueren Wert für den Krümmungsradius zu erhalten, kann auch über die Krümmungsradien zu mehreren Tripeln verschiedener Punkte A, B, C gemittelt werden. Für die Schulterradien ergeben sich dabei Radien zwischen 1 und 8 mm, bevorzugt zischen 2 und 6,5 mm, für die Ränder werden Radien zwischen 0,4 und 3 mm erhalten, bevorzugt zwischen 0,4 und 2,5 mm.

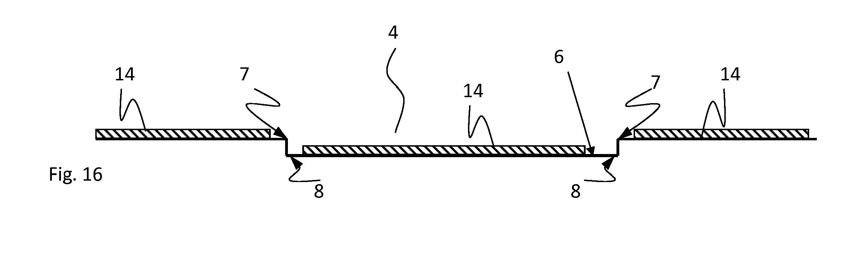

Fig. 16 zeigt eine nochmals weitere Ausführungsform der Erfindung in schematischer Darstellung. Dargestellt sind eine Verformung 4 eines erfindungsgemäß erhaltenen Grünglas- oder Glaskeramikartikels, wobei die Verformung 4 einen Boden 6 aufweist sowie Schultern 7 und Ränder 8 sowie ebenfalls Wände 9, welche hier allerdings der Übersichtlichkeit halber nicht bezeichnet sind. Weiterhin weist der aus einem scheibenförmigen Ausgangsglas erhaltene Grünglas- oder Glaskeramikartikel mindestens eine Dekoration 14 der Oberfläche auf, wobei die mindestens eine Dekoration aus einer Druckfarbe besteht.

Bei der Dekoration 14 handelt es sich dabei um eine Druckfarbe, beispielsweise ausgebildet als keramische Farbe, als organische Farbe oder als halborganische Farbe, beispielsweise eine Sol-Gel-Farbe, oder auch um eine Lüsterfarbe, welche beispielsweise zur Kochzonenmarkierung oder der Kennzeichnung sonstiger Funktionsbereiche eines Kochfeldes dient.

Die Druckfarbe wird bevorzugt im Siebdruckverfahren, aufgebracht. Allerdings sind auch andere Verfahren zur Oberflächendekorierung geeignet, beispielsweise Druckverfahren wie Tintenstrahldruck (Inkjet) oder Tampondruck.

Gemäß einer weiteren Ausführungsform der Erfindung ist die Dekoration 14 mindestens einer Verformung 4 im Bereich der Verformung 4 selbst aufgetragen. Weiterhin kann der erfindungsgemäße Grünglas- oder Glaskeramikartikel weitere Verformungen 4 aufweisen, welche ebenfalls mit einer Dekoration 14 versehen sind, aber auch ohne Dekoration 14 vorliegen können.

Gemäß einer nochmals weiteren Ausführungsform der Erfindung ist die Dekoration mindestens einer Verformung 4 im Bereich der Verformung 4 aufgetragen, wobei die Verformung ausgebildet ist als Vertiefung oder als Erhöhung, wobei die Erhöhung eine maximale Höhe von 0,5 mm aufweist und wobei weiterhin der Auftrag der Dekoration 14 mittels Siebdruck erfolgt.

Weiterhin hat sich gezeigt, dass das Aufbringen der Dekoration auf den erfindungsgemäß erhaltenen Grünglas- oder Glaskeramikartikel auf zwei Arten möglich ist.

Beispielsweise kann der das Aufbringen der Dekoration 14 nach erfolgter Umformung erfolgen.

Gemäß einer weiteren bevorzugten Ausführungsform der Erfindung erfolgt das Aufbringen der Dekoration 14 durch einen nach der Umformung erfolgten Siebdruck. Dies ist möglich, weil durch die erfindungsgemäße Umformung sanfte Radienübergänge erhalten werden, so dass das Rakel sich über die erhaltenen Verformungen führen lässt und dennoch ein gleichmäßiger Farbauftrag in guter Qualität erfolgt.

Gemäß einer besonders bevorzugten Ausführungsform der Erfindung werden Verformungen, welche eine Vertiefung bilden, oder Erhöhungen, welche eine maximale Höhe von 0,5 mm aufweisen, nach erfolgter Verformung beschichtet, wobei die Beschichtung mittels Siebdruck erfolgt.

Weiterhin ist es allerdings auch möglich, andere Druckverfahren zu wählen, um auch Erhöhungen mit größeren Höhen beschichten zu können.

Weiterhin ist es gemäß einer nochmals weiteren Ausführungsform der Erfindung ebenfalls möglich, die Druckfarbe bereits vor dem Verformen aufzutragen. Dies wird ermöglicht durch die mit dem erfindungsgemäßen Verfahren erzielte geringe laterale Ausbreitung der Wärmeeinflusszone, also des Teilbereichs 3 des scheibenförmigen Ausgangsglases. Die Wärmeeinflusszone ist dabei definiert als der Bereich, in dem die Oberflächentemperatur des umzuformenden Substrats die maximal zulässige Temperatur der aufgebrachten Farbe übersteigt. Die maximale zulässige Temperatur ist dabei definiert als die Temperatur, bei welcher die Eigenschaften der Farbe sich irreversibel verändern, beispielsweise durch eine Farbveränderung von Pigmenten, der Zersetzung eines organischen Bindemittels oder ähnliches.

Die genannte Wärmeeinflusszone muss dabei von der Dekoration 14 freigehalten werden, um eine Überhitzung derselben zu vermeiden.

Bezugszeichenliste

1 - geformter Grünglas- oder Glaskeramikartikel
2 - Bereich mit einer Viskosität von $10^{13}$ bis $10^7$ dPas während Verformung
3 - Bereich mit einer Viskosität von $10^9$ bis $10^4$ dPas, bevorzugt $10^8$ bis $10^4$ dPas während Verformung
4 - Verformung
5 - Halter
6 - Boden der Verformung
7 - Schulter der Verformung
8 - Rand der Verformung
9 - Wand der Verformung
10 - umlaufende Einbuchtung
11 - nicht verformter Bereich
12 - Unterseite des scheibenförmigen Glases
13 - genoppte Struktur
14 - Dekoration
R1 - Verformungsradius 1
R2 - Verformungsradius 2
R3 - Verformungsradius 3
R4 - Verformungsradius 4

**Patentansprüche**

1. Geformter, aus einem scheibenförmigen Ausgangsglas erhaltener Glaskeramikartikel (1), der wenigstens eine Verformung (4) der Tiefe T aufweist, für die gilt:

$$T > (Ad\rho Bg)/(\gamma l), \text{ wobei}$$

wobei

A = abzusenkende Fläche des Ausgangsglases in $m^2$,
$\rho$ = Glasdichte in $kg/m^3$,
g = Erdbeschleunigung in $m/s^2$,
$\gamma$ = Oberflächenspannung des Ausgangsglases im geschmolzenen Zustand in N/m,
d = Dicke des Ausgangsglases in m,
B = Breite der Verformung in m,
l = Umfang der Verformung in m,
wobei die Oberfläche des geformten Glasartikels nach dem Verformen keine Störstellen von größer 1 $\mu$m, insbesondere von größer als 0,1 $\mu$m aufweist.

**2.** Geformter, aus einem scheibenförmigen Ausgangsglas erhaltener Grünglas- oder Glaskeramikartikel (1), welcher wenigstens eine Verformung (4) mit einer Tiefe zwischen 0,1 und 2,5 mm aufweist, die **gekennzeichnet ist durch** runde Verformungskanten sowie **durch** das Vorliegen von Schultern (7), Wänden (9), Rändern (8) und Boden (6), wobei als Schulter (7) der Bereich des geformten Grünglas- oder Glaskeramikartikels (1) bezeichnet ist, bei dem es zu einem Übergang von einem höhergelegenen Bereich in die Wand (9) kommt, und als Rand (8) der Bereich des geformten Grünglas- oder Glaskeramikartikels (1), bei dem die Wand (9) der Verformung (4) in den tiefergelegenen Bereich übergeht, bezeichnet ist, und als Boden (6) der Bereich des geformten Grünglas- oder Glaskeramikartikels (1), der zwischen den Wänden (9) der Verformung (4) liegt und von diesen begrenzt wird, bezeichnet ist, wobei der Boden (6) eine konkav oder konvex gewölbte Form aufweist.

**3.** Geformter, aus einem scheibenförmigen Ausgangsglas erhaltener Grünglas- oder Glaskeramikartikel (1), insbesondere gemäß dem vorstehenden Anspruch, welcher wenigstens eine Verformung (1) mit Schultern (7), Wänden (9), Rändern (8) und Boden (6) aufweist, wobei als Schulter (7) der Bereich des geformten Grünglas- oder Glaskeramikartikels (1) bezeichnet ist, bei dem es zu einem Übergang von einem höhergelegenen Bereich in die Wand (9) kommt, und als Rand (8) der Bereich des geformten Grünglas- oder Glaskeramikartikels (1), bei dem die Wand (9) der Verformung (4) in den tiefergelegenen Bereich übergeht, und als Boden (6) der Bereich des geformten Grünglas- oder Glaskeramikartikels (1) bezeichnet ist, der zwischen den Wänden (9) der Verformung liegt und von diesen begrenzt wird, wobei der Oberflächenverlauf der Verformung (4) dergestalt ausgebildet ist, dass die Verformungsradien der Ränder (8) kleiner als die Verformungsradien der Schultern (7) sind.

**4.** Geformter, aus einem scheibenförmigen Ausgangsglas erhaltener Grünglas- oder Glaskeramikartikel (1) nach Anspruch 3, **dadurch gekennzeichnet, dass** die Verformungsradien für die Schultern (7) im Bereich von 1 bis 8 mm liegen, bevorzugt von 2 bis 6,5 mm, und die Verformungsradien für die Ränder (8) im Bereich von 0,4 bis 3 mm liegen, bevorzugt 0,5 bis 2,5 mm.

**5.** Geformter, aus einem scheibenförmigen Ausgangsglas erhaltener Grünglas- oder Glaskeramikartikel (1) nach einem der beiden Ansprüche 3 oder 4, **gekennzeichnet durch** ein Verhältnis $V_{S/R}$ von Schulterradien zu Randradien im Bereich von 2 bis 4.

**6.** Geformter, aus einem scheibenförmigen Ausgangsglas erhaltener Grünglas- oder Glaskeramikartikel (1) nach einem der Ansprüche 1 bis 5, wobei der Grünglas- oder Glaskeramikartikel (1) weiterhin mindestens eine Dekoration (14) der Oberfläche aufweist und wobei die mindestens eine Dekoration (14) aus einer Druckfarbe, beispielsweise einer keramischen Farbe, einer organischen Farbe oder eine halborganischen Farbe, beispielsweise einer Sol-Gel-Farbe, besteht.

**7.** Geformter, aus einem scheibenförmigen Ausgangsglas erhaltener Grünglas- oder Glaskeramikartikel (1) nach Anspruch 6, wobei die Dekoration (14) auch im Bereich mindestens einer Verformung (4) aufgetragen ist.

**8.** Geformter, aus einem scheibenförmigen Ausgangsglas erhaltener Grünglas- oder Glaskeramikartikel (1) nach Anspruch 7, wobei die Verformung (4) als Vertiefung oder als Erhöhung ausgebildet ist, wobei die Erhöhung eine maximale Höhe von 0,5 mm aufweist, und wobei weiterhin die Dekoration (14) mittels Siebdruck aufgebracht ist.

**9.** Verfahren zur formfreien Herstellung eines geformten Grünglas- oder Glaskeramikartikels (1) mit vorbestimmter Geometrie, wobei der Grünglas- oder Glaskeramikartikel (1) mindestens eine Dekoration (14) aufweist, welche aus einer Druckfarbe, beispielsweise einer keramischen Farbe, einer organischen Farbe oder einer halborganischen Farbe, beispielsweise einer Sol-Gel-Farbe, ausgebildet ist, und wobei das Verfahren mindestens die folgenden Schritte aufweist:

- Bereitstellen eines scheibenförmigen Ausgangsglases,
- Halten des Ausgangsglases,
- Erwärmen des Ausgangsglases so, dass in diesem Teilbereich eine Viskosität des Ausgangsglases von $10^9$ bis $10^4$ dPas, insbesondere von $10^8$ bis $10^4$ dPas erhalten wird und so, dass eine Viskosität des Ausgangsglases an den Stellen, an denen das Ausgangsglas gehalten wird, von $10^{12}$ dPas, bevorzugt von $10^{13}$ dPas, nicht unterschritten wird, wobei das Erwärmen mittels wenigstens eines Laserstrahls entlang einer geschlossenen Linie und dergestalt erfolgt, dass der für die Keimbildung relevante Temperaturbereich, **gekennzeichnet durch** starke Bildung von Kristallisationskeimen, in höchstens 50 Sekunden durchfahren wird,
- Verformen des erwärmten Ausgangsglases **durch** äußere Krafteinwirkung, bis die vorbestimmte Geometrie des Glasartikels erreicht ist, und
- Auftrag mindestens einer Druckfarbe auf einen vorbestimmten Bereich des Ausgangsglases, sowie
- optional die Umwandlung des Grünglases in eine Glaskeramik **durch** eine anschließende Keramisierung.

**10.** Verfahren nach Anspruch 9, wobei der Auftrag der mindestens einen Druckfarbe durch ein Druckverfahren, bevorzugt einen Siebdruck, einen Tampondruck und/oder einen Strahldruck, beispielsweise einen Tintenstrahldruck, erfolgt.

**11.** Verfahren nach einem der Ansprüche 9 oder 10, wobei die mindestens eine Druckfarbe auch im Bereich der Verformung aufgetragen ist.

**12.** Verfahren nach Anspruch 11, wobei die Verformung ausgebildet ist als Vertiefung oder als Erhöhung, wobei die Erhöhung eine maximale Höhe von 0,5 mm aufweist und wobei weiterhin der Auftrag der Druckfarbe durch Siebdruck erfolgt.

Vorgabe der Geometrie des Grünglas- bzw. Glaskeramikartikels

Berechnung des geeigneten Temperatur/Viskositäts-Zeit-Kraft-Verlaufs

Programmierung Laserscanner mit Temperatur-Zeit-Kraft-Verlauf

Einbringen des Ausgangsglases

Abfahren des Temperatur-Zeit-Kraft-Programms

Formung des Grünglases

Entnahme des geformten Grünglases

Optional: Keramisierung des Grünglases unter Bildung einer Glaskeramik

Fig.1

Schnitt A-B

Fig. 2

Fig. 3

Fig. 4

Fig. 5

Fig. 6

Fig. 7

Fig. 8

19

Fig. 9

Fig. 10

Fig. 11

EP 2 987 774 A2

Fig. 12

Fig. 13

Fig. 14

Horizontal

Vertikal

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2503467 C2
- US 20100000259 A1
- DE 102010020439 A1
- US 20120114901 A1
- WO 2011000012 A1
- DE 102011050628 A1
- DE 10102576 A1
- DE 10047576 A1
- DE 102007012146 B4
- DE 19834801 A1